# EUROPÄISCHE PATENTSCHRIFT

(11) **EP 1 987 937 B1**
(45) Veröffentlichungstag und Bekanntmachung des Hinweises auf die Patenterteilung: **02.06.2010**
(21) Anmeldenummer: 08007627.6
(22) Anmeldetag: 18.04.2008
(51) Int. Cl.: B29C 45/14, B65H 3/44

(54) **Zuführeinrichtung für flache Substrate, Spritzgussvorrichtung und Verfahren zum Zuführen von flachen Substraten**
Supplying device for flat substrates, injection moulding device and method for supplying flat substrates
Dispositif d'introduction pour substrats plats, dispositif de moulage par injection, procédé d'introduction de substrats plats

(30) Priorität: 30.04.2007 DE 102007020654
(43) Veröffentlichungstag der Anmeldung: 05.11.2008
(73) Patentinhaber: Waldorf Technik GmbH & Co. KG, 78234 Engen (DE)
(72) Erfinder: Fuhrmann, Ralf, 78234 Engen (DE)
(74) Vertreter: Wagner, Kilian

(56) Entgegenhaltungen:
- EP-A- 1 745 911
- GB-A- 1 185 651
- US-A- 4 637 600

## Beschreibung

Die Erfindung betrifft eine Zuführeinrichtung für flache Substrate wie Etiketten oder dergleichen gemäß dem Oberbegriff des Anspruchs 1. Ferner betrifft die Erfindung eine Spritzgussvorrichtung (Spritzgussanordnung) gemäß Anspruch 14 und ein Verfahren zum Zuführen von flachen Substraten gemäß dem Oberbegriff des Anspruchs 15.

Vorgenannte Zuführeinrichtungen finden häufig Einsatz im Bereich der Spritzgusstechnik. Sie dienen insbesondere zum automatischen Zuführen von Verpackungsetiketten in einen IML (In-Mold-Labelling) - Fertigungsprozess zum Herstellen von mit den Etiketten zu versehenden Verpackungsbehältern.

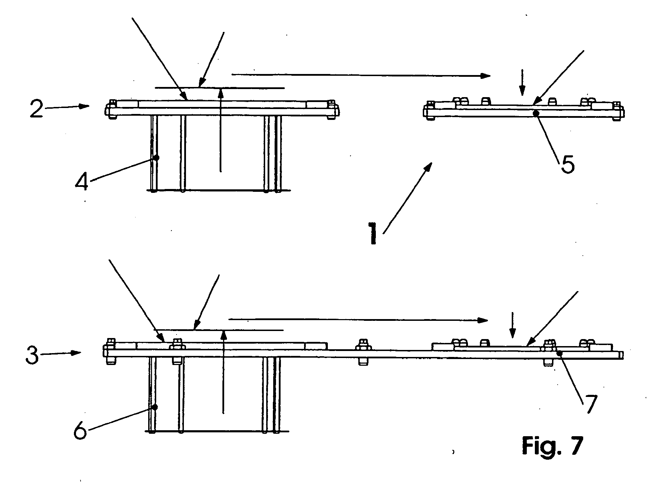

Eine typische, gattungsgemäße Zuführeinrichtung zum Einsatz in Spritzgussmaschinen ist in Fig. 7 dargestellt. Diese, zum hausinternen Stand der Technik gehörige Zuführeinrichtung 1 umfasst zwei Arbeitsebenen, nämlich eine obere Arbeitsebene 2 sowie eine darunter angeordnete untere Arbeitsebene 3. In der oberen Arbeitsebene 2 ist ein oberes Magazin 4 für in einem Stapel zusammengefasste Etiketten sowie eine obere Ablageposition 5 vorgesehen. Analog umfasst die untere Arbeitsebene 3 ein unteres Magazin 6 sowie eine untere Ablageposition 7. In jeder Arbeitsebene 2, 3 ist jeweils eine nicht dargestellte Handhabungseinrichtung mit jeweils einem Entnahmemittel vorgesehen, wobei gleichzeitig mithilfe der Handhabungseinrichtungen aus dem oberen und dem unteren Magazin 4, 6 jeweils ein Etikett entnommen, linear verfahren und in der jeweiligen Ablageposition 5, 7 abgelegt wird. Von den Ablagepositionen, 5, 7 werden die Etiketten dann mittels einer nicht gezeigten Einlegehand entnommen und in jeweils eine Spritzgussform eingelegt, um in dem darauf folgenden Spritzgussverfahren an den herzustellenden Behältnissen festgelegt bzw. mit den Behältnissen verbunden zu werden. Nachteilig bei der bekannten Zuführeinrichtung ist es, dass das Nachfüllen der Magazine nicht während der Produktion geschehen kann. Hierzu muss die Zuführeinrichtung und somit auch eine mit einer derartigen Zuführeinrichtung ausgestattete Spritzgussvorrichtung angehalten werden, was zu einer Produktionsverzögerung und damit zu einer geringen produzierten Stückzahl pro Zeiteinheit führt.

Aus der US-A-4 637 600 ist eine Zuführeinrichtung bekannt, bei der aus einem oberen Magazin entnommene Substrate ausschließlich in eines oberen Ablageposition und aus einem unteren Magazinen entnommenen Substrate ausschließlich in einer unteren Ablageposition ablegbar sind.

An dieser Stelle setzt die Erfindung an, deren Aufgabe es ist, eine verbesserte Zuführeinrichtung vorzuschlagen, deren Magazine während des laufenden Betriebs aufgefüllt werden können. Ferner besteht die der Erfindung zugrunde liegende Aufgabe darin, eine entsprechend verbesserte Spritzgussvorrichtung sowie ein entsprechend verbessertes Zuführverfahren vorzuschlagen.

Diese Aufgabe wird hinsichtlich der Zuführeinrichtung mit den Merkmalen des Anspruchs 1, hinsichtlich der Spritzgussvorrichtung mit den Merkmalen des Anspruchs 14 und hinsichtlich des Zuführverfahrens mit den Merkmalen des Anspruchs 15 gelöst. Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder in den Figuren angegebenen Merkmalen. Zur Vermeidung von Wiederholungen sollen auch lediglich vorrichtungsgemäß offenbarte Merkmale als verfahrensgemäß offenbart gelten.

Der Erfindung liegt der Gedanke zugrunde, den beiden Arbeitsebenen der Zuführeinrichtung lediglich eine gemeinsame Handhabungseinrichtung zuzuordnen und diese derart auszubilden bzw. anzusteuern, dass mit dem mindestens einen Entnahmemittel der Handhabungseinrichtung sowohl Substrate aus dem oberen Magazin als auch aus dem unteren Magazin entnommen werden können. Ferner ist die Handhabungseinrichtung derart ausgebildet bzw. angesteuert, dass mittels der Handhabungseinrichtung bzw. mit dem Entnahmemittel der Handhabungseinrichtung ein Substrat, unabhängig davon, ob es aus dem oberen Magazin oder aus dem unteren Magazin entnommen wurde, in der oberen oder alternativ in der unteren Ablageposition ablegbar ist. Diese neuartige Ausgestaltungsform der Zuführeinrichtung ermöglicht es, während mittels der Handhabungseinrichtung Substrate aus einem der Magazine entnommen und in der oberen oder der unteren Ablageposition abgelegt werden, das andere Magazin nachzufüllen. Daher muss während des Nachfüllvorgangs die Zuführeinrichtung und somit eine mit der Zuführeinrichtung ausgestattete Vorrichtung nicht angehalten werden, wodurch die Produktionsleistung (Stückzahl pro Zeiteinheit) gesteigert wird. Ferner ist eine gemäß dem Konzept der Erfindung ausgebildete Zuführeinrichtung kostengünstiger herstellbar, da lediglich eine die beiden Arbeitsebenen bedienende Handhabungsvorrichtung mit vorzugsweise einem einzigen Entnahmemittel, beispielsweise Saugnäpfen oder dergleichen, vorgesehen werden muss. Im Gegensatz zu bekannten Zuführeinrichtungen muss die Handhabungseinrichtung derart ausgebildet werden, dass das Entnahmemittel zwischen den Arbeitsebenen verfahrbar ist. Gemäß einer bevorzugten Ausführungsform sind die Substrate in den Magazinen entlang einer vertikalen Stapelachse gestapelt.

In Weiterbildung der Erfindung ist mit Vorteil vorgesehen, dass die Handhabungseinrichtung derart ausgebildet bzw. angesteuert ist, dass die aus einem der Magazine entnommenen Substrate abwechselnd in der oberen und der unteren Ablageposition ablegbar sind. Wird beispielsweise ein erstes Substrat aus dem oberen Magazin entnommen und in der oberen Ablageposition abgelegt, so wird ein nachfolgend aus dem oberen Magazin entnommenes Substrat gemäß der vorteilhaften Weiterbildung der Erfindung in der unteren Ablageposition abgelegt, woraufhin ein danach aus dem oberen Magazin entnommenes Substrat wieder in der oberen Ablageposition abgelegt wird, usw.. Erfolgt zwischendurch ein Magazinwechsel, so wird die alternierende Ablage mit Vorteil beibehalten.

Gemäß einer bevorzugten Ausführungsform der Erfindung erfolgt ein Magazinwechsel nur, nachdem entweder das Magazin, vorzugsweise vollständig, von der Handhabungseinrichtung bzw. dem Entnahmemittel entleert wurde, oder bis beispielsweise eine manuelle oder automatische Magazin-Wechselansteuerung erfolgt. Diese Ausführungsform garantiert, dass ausreichend Zeit zum Nachfüllen des jeweils anderen Magazins vorgesehen ist, so dass ein Anhalten der Zuführeinrichtung unterbleiben kann.

Aus Raumersparnisgründen ist es von Vorteil, wenn die Magazine auf einer gemeinsamen Seite der Handhabungseinrichtung und die Ablagepositionen gemeinsam auf der jeweils anderen Seite der Handhabungseinrichtung angeordnet sind. Bevorzugt sind dabei die Magazine unmittelbar übereinander wie auch die Ablagepositionen unmittelbar übereinander, d.h. symmetrisch angeordnet.

Um weiteren Bauraum einzusparen, ist eine Ausführungsform von Vorteil, bei der der Abstand zwischen den auf der einen Seite der Handhabungseinrichtung angeordneten Magazinen und den auf der anderen Seite der Handhabungseinrichtung angeordneten Ablagepositionen minimiert ist, vorzugsweise dergestalt, dass der geringste Abstand zwischen den Magazinen und den Ablagepositionen geringer ist als die Längserstreckung der zuzuführenden Substrate in den Magazinen bzw. in den Ablagepositionen quer zu der Strecke des geringsten Abstandes. Bevorzugt ist die entsprechende Längserstreckung des mindestens einen Entnahmemittels ebenfalls größer als der geringste Abstand zwischen den Magazinen und den Ablagepositionen.

Um bei einer derartigen, dicht beieinander liegenden Anordnung von Magazinen und Ablagepositionen eine Überführung zwischen den Magazinen und den Ablagepositionen realisieren zu können, ist gemäß einer bevorzugten Ausführungsform der Erfindung vorgesehen, dass das Entnahmemittel durch eine gekoppelte translatorisch-rotatorische Bewegung zwischen den Magazinen und den Ablagepositionen verstellbar ist. Während der Drehbewegung der Entnahmemittel werden die Entnahmemittel dabei gleichzeitig translatorisch verstellt, insbesondere durch einen Bereich (Zwischenposition bzw. Liftposition) hindurch, der eine um 90° zu den Magazinen bzw. den Ablagepositionen geschwenkte Anordnung der Entnahmemittel erlaubt. Vorzugsweise ist dies die Position, in der die Entnahmemittel mittels der Handhabungseinrichtung zwischen den Arbeitsebenen verstellbar sind.

Aus Platzersparnisgründen ist eine Ausführungsform von Vorteil, bei der das Entnahmemittel nach der Entnahme eines Substrates aus einem der Magazine um 180° verschwenkt wird, um das Substrat in einer der Ablagepositionen ablegen zu können.

In Ausgestaltung der Erfindung ist mit Vorteil vorgesehen, dass eine Hubeinrichtung zum Verstellen des Entnahmemittels entlang einer vertikalen Z-Achse vorgesehen ist. Mittels der Hubeinrichtung lässt sich das Entnahmemittel somit zwischen den Arbeitsebenen verstellen. Vorzugsweise umfasst die Hubeinrichtung, einen, insbesondere servo-elektrischen, Antrieb zum vertikalen Verstellen des Entnahmemittels. Bevorzugt umfasst die Hubeinrichtung einen vertikalen Träger mit einer Führungsschiene für einen mittels des Antriebs entlang der Z-Achse verstellbaren Hubschlitten an dem das Entnahmemittel, vorzugsweise mittels eines horizontalen Armes, festgelegt ist.

Zur Realisierung der translatorischen Bewegungskomponente des Entnahmemittels ist in Weiterbildung der Erfindung mit Vorteil vorgesehen, dass die Hubeinrichtung an einem translatorisch entlang einer horizontalen X-Achse verstellbaren Schlitten angeordnet ist. Bevorzugt sind entlang der X-Achse verlaufende Führungsschienen zum Führen des Schlittens vorgesehen. Zur Realisierung der rotatorischen Bewegungskomponente des Entnahmemittels ist mit Vorteil vorgesehen, dass die Hubeinrichtung, insbesondere ein Träger der Hubeinrichtung, um die Z-Achse verschwenkbar an dem Schlitten gelagert ist.

Um eine gezielte Entnahme und ein gezieltes Ablegen eines Substrates mittels des Entnahmemittels zu ermöglichen, ist in Weiterbildung der Erfindung vorgesehen, dass das Entnahmemittel relativ zu der Hubeinrichtung, insbesondere relativ zu dem Hubschlitten der Hubeinrichtung entlang der Z-Achse verstellbar ist, wobei der maximal zurückzulegende Relativ-Verstellweg relativ zu dem Hubschlitten der Hubeinrichtung vorzugsweise kürzer ist als der mittels des Hubschlittens zwischen den Arbeitsebenen zurückzulegende Verstellweg entlang der Z-Achse. Bevorzugt ist das Entnahmemittel entlang der Z-Achse zum Ausgleich der Magazinfüllstände relativ zu einem sich in horizontaler Richtung erstreckenden Arm vertikal verstellbar, wobei zur Realisierung der Relativ-Verstellbewegung des Entnahmemittels beispielsweise ein pneumatischer oder elektromotorischer Antrieb vorgesehen werden kann. Insbesondere ist das Entnahmemittel auf einem vertikalen Relativ-Verstellschlitten an dem sich in horizontaler Richtung erstreckenden Arm gelagert, welcher wiederum an den entlang der Z-Achse verstellbaren Hubschlitten der Hubeinrichtung festgelegt ist.

Bevorzugt ist eine Ausführungsform, bei der dem Schlitten ein Schwenkarm zugeordnet ist, der gelenkig mit einem Kopplerarm verbunden ist, welcher wiederum an einer Position der Zuführeinrichtung angelenkt ist, relativ zu der der Schlitten entlang der X-Achse verstellbar ist. Wird nun der Schwenkarm rotatorisch mittels eines Antriebs, insbesondere mittels eines elektromotorischen Antriebs angetrieben, so resultiert aus der Kopplung mit dem Kopplerarm eine translatorische Bewegung des Schlittens entlang der X-Achse.

Zur Realisierung einer mit der translatorischen Verstellbewegung der Schlittens entlang der X-Achse gekoppelten Verschwenkbewegung des Entnahmemittels bzw. der Hubeinrichtung mit Entnahmemittel um die Z-Achse ist es einerseits denkbar, dass eine Welle, an der der Schwenkarm drehbar gelagert ist, gleichzeitig eine drehfest mit der Hubeinrichtung, insbesondere mit einem Träger der Hubeinrichtung, verbundene Welle ist. Bevorzugt ist jedoch eine Ausführungsform, bei der die Hubeinrichtung, insbesondere der Träger der Hubeinrichtung, mit Abstand zu der Welle des Schwenkarms relativ zu dem Schlitten am Schlitten verdrehbar gelagert ist, wobei die Hubeinrichtung, insbesondere der Träger der Hubeinrichtung drehmomentübertragend mit dem Antrieb, insbesondere dem elektromotorischen Antrieb zum Verschwenken des Schwenkarms und damit zum Herbeiführen einer translatorischen Bewegung des Schlittens zusammen mit der Hubeinrichtung gekoppelt ist. Bevorzugt ist zur Kopplung ein Zahnriemen oder eine Kette vorgesehen.

Insbesondere für den Einsatz der Zuführeinrichtung in einer Spritzgussvorrichtung ist es von Vorteil, wenn jede Ablageposition als eine Zentriereinrichtung zum Zentrieren der aus den Magazinen entnommenen Substrate ausgebildet ist. Beispielsweise können die Zentriereinrichtungen aus randseitigen Zentrierbolzen bestehen, die bevorzugt konisch ausgeformt sind. Eine Zentrierung der Substrate ist insbesondere von Vorteil zur exakten Positionierung der Substrate auf einer Einlegehand zum Einlegen der Substrate in jeweils eine Spritzgussform.

Besonders bevorzugt ist eine Zuführeinrichtung, bei der an dem Schlitten ein Antrieb zum Verschwenken des Schwenkarms und damit zum translatorischen Verstellen des Schlittens angeordnet ist.

Besonders bevorzugt ist eine Zuführeinrichtung, bei der der Antrieb, insbesondere mittels eines Zahnriemens oder einer Kette, mit der Hubeinrichtung, diese um die Z-Achse veschwenkend, drehmomentübertragend gekoppelt ist.

Besonders bevorzugt ist eine Zuführeinrichtung, bei der die Ablagepositionen als Zentriereinrichtungen ausgebildet sind.

Ferner betrifft die Erfindung eine Spritzgussvorrichtung (Spritzgussanordnung) mit einer zuvor beschriebenen Zuführeinheit zum Zuführen von Etiketten in einen IML (In-Mold-Labelling) - Fertigungsprozess.

Weiterhin betrifft die Erfindung ein Verfahren zum Zuführen von flachen Substraten wie Etiketten oder dergleichen mit den Schritten Entnehmen eines Substrates aus einem oberen oder einem unteren Magazin, Ablegen des Substrates in einer oberen oder einer unteren Ablageposition, Entnehmen eines weiteren Substrates aus demselben zuvor angefahrenen Magazin und Ablegen dieses weiteren Substrates in der anderen der beiden Ablagepositionen. Vorzugsweise erfolgt die Entnahme von Substraten aus dem oberen oder aus dem unteren Magazin solange, bis das entsprechende Magazin entleert ist, oder ein entsprechender Befehl zum Anfahren des jeweils anderen Magazins erfolgt.

Wird das Zuführverfahren mit einer zuvor beschriebenen Zuführeinrichtung durchgeführt, so ist es wichtig, dass das Entnahmemittel zum alternierenden Ablegen von Substraten in den Ablagepositionen zwischen den Arbeitsebenen verstellt wird. Vorzugsweise erfolgt das Verstellen zwischen einem Magazin und einer der Ablagepositionen in einer gekoppelten translatorischen, rotatorischen Bewegung.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine perspektivische Gesamtansicht einer Zuführeinrichtung sowie einer Einlegehand zum Einlegen von als Etiketten ausgebildeten Substraten in eine nicht dargestellte Spritzgussform,
- Fig. 2a bis Fig. 2e: unterschiedliche Ansichten der Zuführeinrichtung während der Entnahme eines Substrates aus einem oberen Magazin,
- Fig. 3a bis Fig. 3e: unterschiedliche Ansichten der Zuführeinrichtung in einer Zwischenposition beim Verfahren eines entnommenen Substrates in eine obere Ablageposition,
- Fig. 4a bis Fig. 4e: unterschiedliche Ansichten der Zuführeinrichtung in einer weiteren Zwischenposition beim Verfahren des Substrates in die obere Ablageposition,
- Fig. 5a bis Fig. 5e: unterschiedliche Ansichten der Zuführeinrichtung beim Ablegen des Substrates in die obere Ablageposition,
- Fig. 6a bis Fig. 6e: unterschiedliche Darstellungen der Zuführeinrichtungen mit in einer Liftposition befindlichem Entnahmemittel und
- Fig. 7: eine Zuführeinrichtung gemäß dem hausinternen Stand der Technik.

In den Figuren sind gleiche Bauteile und Bauteile mit der gleichen Funktion mit den gleichen Bezugszeichen gekennzeichnet.

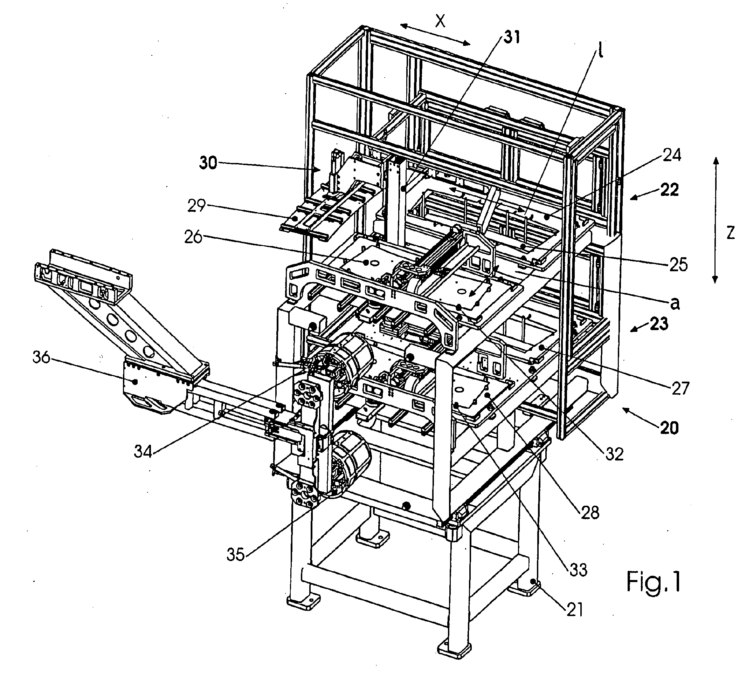

In Fig. 1 ist eine Zuführeinrichtung 20 als Teil einer Spritzgussvorrichtung gezeigt. Die Zuführeinrichtung 20 umfasst ein Trägergestell 21 aus Stahl. In dem Trägergestell 21 ist eine obere Arbeitsebene 22 sowie eine untere Arbeitsebene 23 ausgebildet. In der oberen Arbeitsebene befindet sich ein oberes Magazin 24 mit in einem Stapel abgelegten Substraten 25 (Etiketten) sowie eine als Zentriereinrichtung ausgebildete obere Ablageposition 26 für die Substrate 25.

Unmittelbar unterhalb des oberen Magazins 24 befindet sich in der unteren Arbeitsebene 23 ein unteres Magazin 27, das baugleich ist wie das obere Magazin 24. Ferner befindet sich in der unteren Arbeitsebene 23 eine untere, ebenfalls als Zentriereinrichtung ausgebildete Ablageposition 28. Die Magazine 24, 27 können beispielsweise mit jeweils einem Hubtisch für die entlang einer Z-Achse gestapelten Substrate 25 versehen sein, um zu gewährleisten, dass sich die Substrate 25 immer auf der gleichen Entnahmehöhe befinden. Wird auf einen Hubtisch verzichtet, so muss der während des Betriebs wachsende Höhenunterschied durch ein entsprechendes Nachführen des Entnahmemittels 29 ausgeglichen werden.

Das nicht näher gezeigte Saugmittel aufweisende Entnahmemittel 29 ist Teil einer Handhabungseinrichtung 30, die derart ausgebildet ist, dass Substrate 25 aus beiden Magazinen 24, 27 entnommen und in beide Ablagepositionen 26, 28 abgelegt werden können. Bevorzugt ist die Handhabungseinrichtung 30 derart angesteuert, dass zunächst eines der Magazine 24, 27 entleert wird, bevor die Entnahme von Substraten aus dem jeweils anderen Magazin erfolgt. Bevorzugt werden die aus den Magazinen 24, 27 entnommenen Substrate 25 alternierend in der oberen und der unteren Ablageposition 26, 28 abgelegt.

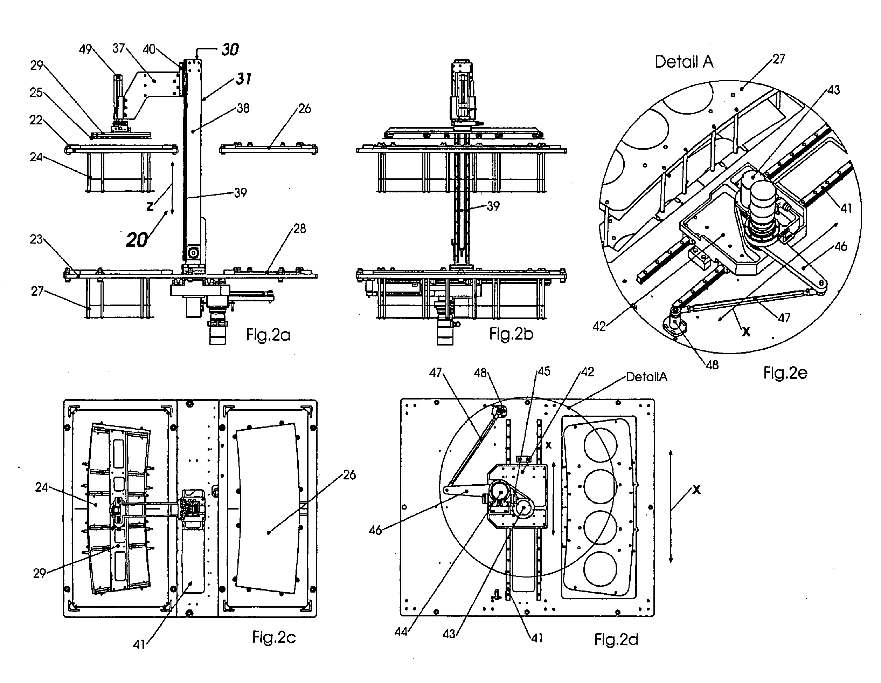

Die Handhabungseinrichtung 30 umfasst eine Hubeinrichtung 31 zum Verstellen des Entnahmemittels 29 entlang der Z-Achse. Die Hubeinrichtung 31 ist angetrieben drehbar gelagert auf einem in Fig. 1 nicht gezeigten Schlitten, mittels dem die gesamte Hubeinrichtung 31 zusammen mit dem Entnahmemittel 29 entlang einer horizontal verlaufenden X-Achse translatorisch verstellbar ist. Durch die verschwenkbare Lagerung der Hubeinrichtung 31 auf dem nicht gezeigten Schlitten ist das Entnahmemittel 29 um die Z-Achse verschwenkbar, wodurch die Substrate 25 insgesamt durch eine translatorisch-rotatorische Bewegung von den Magazinen 24, 27 in die Ablagepositionen 26, 28 überführbar sind. Zum Verschwenken des Entnahmemittels 29 um die Z-Achse und zum gekoppelten Verstellen der Hubeinrichtung 31 mit dem Entnahmemittel 29 entlang der X-Achse ist ein in den Fig. 2a bis 6e gezeigter elektromotorischer Antrieb 44 vorgesehen. Zum Verstellen des Entnahmemittels 29 mittels der Hubeinrichtung 31 entlang der Z-Achse ein pneumatischer Antrieb vorgesehen ist.

In Fig. 1 befindet sich das Entnahmemittel 29 in einer Liftposition, in der es zwischen den Arbeitsebenen 22, 23 verstellbar ist. Aus Fig. 1 wird deutlich, dass der minimale Abstand a zwischen den Substraten 25 in den Magazinen 24, 27 und den entsprechenden Ablagepositionen 26, 28 wesentlich geringer ist als die Längserstreckung 1 der Substrate 25 bzw. des Entnahmemittels 29.

Ferner ist aus Fig. 1 zu ersehen, dass die Ablagepositionen 26, 28 als Zentriereinrichtungen ausgebildet sind. Hierzu weisen die Ablagepositionen 26, 28 randseitige Bolzen 32, 33 auf, die eine exakte Positionierung der Substrate 25 in den Ablagepositionen 26, 28 ermöglichen. Die exakte Positionierung der Substrate 25 in den Ablagepositionen 26, 28 ist notwendig, damit die Substrate 25 exakt auf übereinander angeordnete Einlegeeinrichtungen 34, 35 einer Einlegehand 36 ablegbar sind, mittels der jeweils zwei übereinander angeordnete und die Einlegeeinrichtungen 34, 35 umwickelnde Substrate 25 in nicht gezeigte Spritzgussformen einlegbar sind.

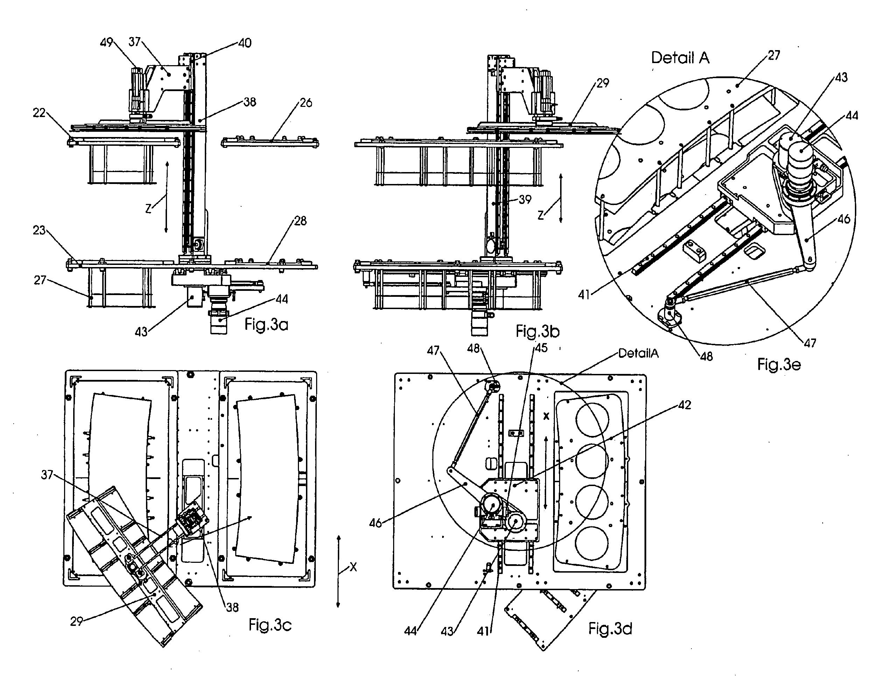

Im Folgenden werden unterschiedliche Bewegungspositionen des Entnahmemittels 29 bzw. der Handhabungseinrichtung 30 der Zuführeinrichtung 20 beschrieben, wobei die Ansicht der Zuführeinrichtung 20 gemäß Fig. 2a der Ansicht der Zuführeinrichtung 20 gemäß den Fig. 3a, 4a, 5a und 6a entspricht. Das gleiche gilt entsprechend für die Ansichten der Fig. 2b, 3b etc., die Ansichten 2c, 3c, etc., die Ansichten 2d, 3d, etc. sowie die Ansichten 2e, 3e, etc.

In den Fig. 2a bis 2e sind die beiden Arbeitsebenen 22, 23 der Zuführeinrichtung 20 schematisch dargestellt. Zu erkennen ist die zwischen den Magazinen 24, 27 und den Ablagepositionen 26, 28 aufgenommene Handhabungseinrichtung 30.

In den Fig. 2a bis Fig. 2e ist eine Position des Entnahmemittels 29 dargestellt, in der es gerade ein Substrat 25 aus dem oberen Magazin 24 entnommen hat. Das Saugmittel umfassende Entnahmemittel 29 ist an einem Arm 37 gehalten und entlang der Z-Achse relativ zu dem Arm 37 mittels eines pneumatischen Antriebs 49 verstellbar, um in einer schnellen Bewegung Substrate 25 aufnehmen und wieder ablegen zu können. Der Arm 37 wiederum ist Teil der Hubeinrichtung 31, die einen vertikalen Träger 38 umfasst. Der vertikale Träger 38 ist mit einer entlang der Z-Achse verlaufenden Schiene 39 versehen, entlang derer ein den Arm 37 tragender Hubschlitten 40 entlang der Z-Achse verstellbar ist.

Wie aus den Fig. 2c bis 2e ersichtlich ist, befinden sich in der unteren Arbeitsebene 23 sich entlang der X-Achse erstreckende Führungsschienen 41, auf denen ein Schlitten 42 translatorisch verstellbar ist. Dabei zeigen die Fig. 2d und 2e eine Ansicht des Schlittens 42 von unten. Der Schlitten 42 trägt den sich in vertikaler Richtung erstreckenden Träger 38 der Hubeinrichtung 31. Der Träger 38 ist in einem Drehlager 43 relativ zu dem Schlitten 42 um die Z-Achse drehbar gelagert. Zum Hervorrufen einer Drehbewegung des Trägers 38 der Hubeinrichtung 31 um die Z-Achse ist ein elektromotorischer Antrieb 44, der an dem Schlitten 42 festgelegt ist, über einen Zahnriemen 45 mit dem Träger 38 verbunden. Gleichzeitig ist eine Welle des Antriebs 44 drehfest mit einem Schwenkarm 46 verbunden, der um eine parallel zu dem Träger 38 verlaufende Schwenkachse verschwenkbar ist. Der Schwenkarm 46 ist endseitig gelenkig mit einer Kopplerstange 47 verbunden, die an der Zuführeinrichtung 20 an einer Position 48 angelenkt ist. Der Schlitten 42 ist relativ zu der Position 48 entlang der X-Achse verstellbar.

Wird nun der Antriebsmotor 44 bestromt, so wird zum einen der Schwenkarm 46 verschwenkt, was aufgrund der Anlenkung an die Kopplerstange 47 zu einer translatorischen Verstellbewegung des Schlittens 42 auf den Führungsschienen 41 entlang der X-Achse führt. Gleichzeitig wird der Träger 38 um die Z-Achse verschwenkt, so dass gleichzeitig das über den Arm 37 an den Träger 38 angebundene Entnahmemittel 29 verschwenkt wird. Nach der in den Fig. 2a bis 2e gezeigten Entnahme eines Substrates 25 aus dem oberen Magazin 24 wird das Entnahmemittel 29 über den soeben beschriebenen Mechanismus in die Z-Achse verschwenkt und gleichzeitig entlang der X-Achse translatorisch bewegt, wobei eine Zwischenposition dieser gekoppelten rotatorischen und translatorischen Bewegung in den Fig. 3a bis 3e dargestellt ist. Zu erkennen ist, dass das Entnahmemittel entlang der X-Achse in den Fig. 3c und 3d in der Zeichnungsebene nach unten, also in der Zuführeinrichtung 20 nach außen in Richtung der in Fig. 1 gezeigten Liftposition verstellt wurde. Hierzu wurde der Schwenkarm 46 (vergleiche Fig. 3d) in der Zeichnungsebene im Uhrzeigersinn verschwenkt, was gleichzeitig eine translatorische Bewegung des Schlittens 42 in der Zeichnungsebene nach unten sowie eine Verschwenkbewegung des Trägers 38 aufgrund der Kopplung über den Zahnriemen 45 mit dem Antrieb 44 zur Folge hatte.

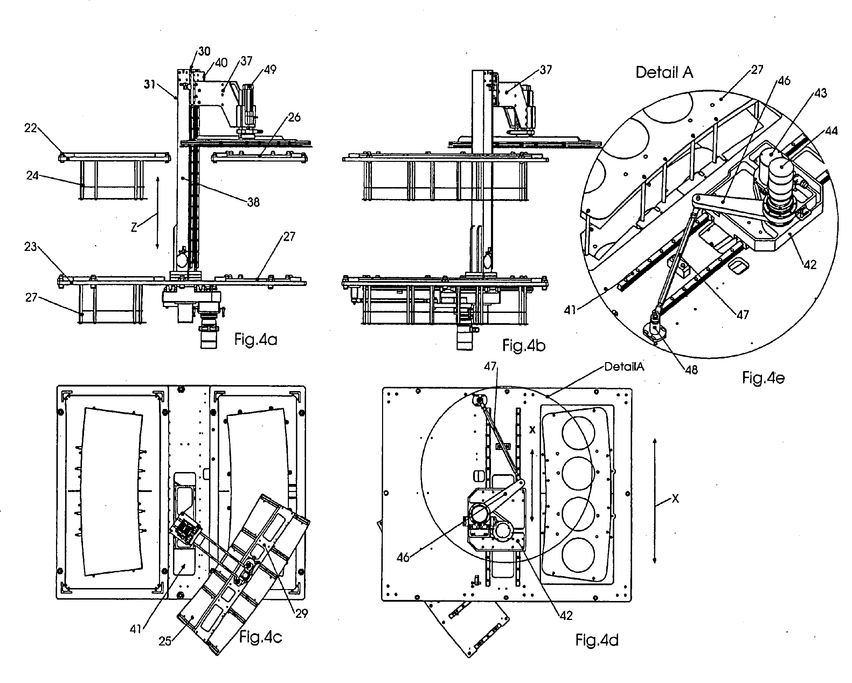

In den Fig. 4a bis 4e ist eine Position des Entnahmemittels 29 mit dem Substrat 25 zu erkennen, in der das Entnahmemittel 29 die in Fig. 1 gezeigte Liftposition bereits überschwenkt hat. Hierzu wurde der Schwenkarm 46 im Vergleich zu den Figuren 3a bis 3c weiter im Uhrzeigersinn gedreht, was nach Überschreiten der Liftposition eine Zurückbewegung des Schlittens 42 entlang der X-Achse zur Folge hatte.

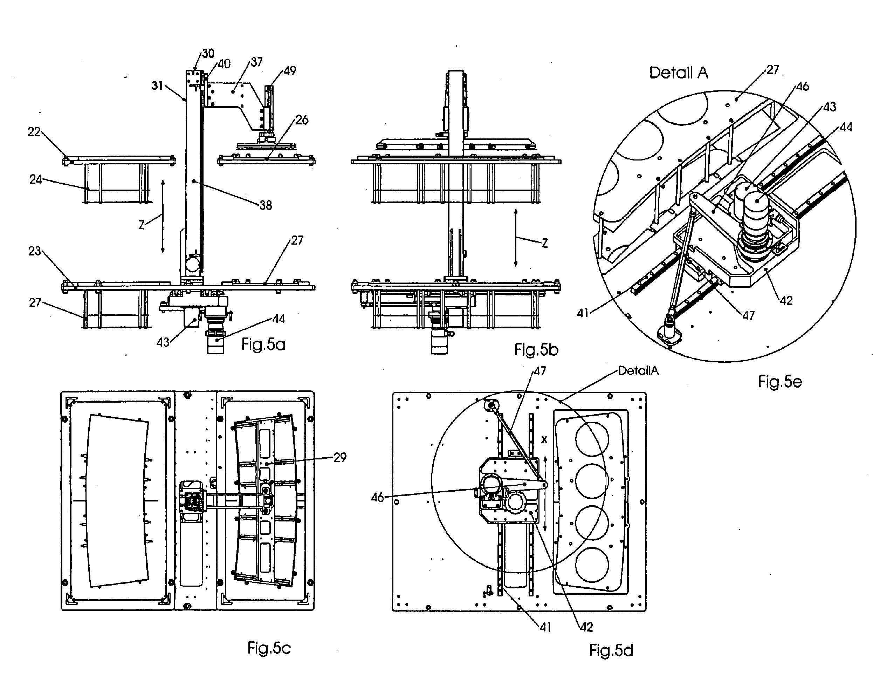

In den Fig. 5a bis 5e ist zu erkennen, dass das Entnahmemittel 29 sich unmittelbar oberhalb der oberen Ablageposition 26 befindet. Hierzu wurde der Schwenkarm 46 weiter im Uhrzeigersinn verstellt, wodurch zum einen das Entnahmemittel 29 um die Z-Achse verschwenkt und der Schlitten 42 gekoppelt entlang der X-Achse zurückverstellt wurde.

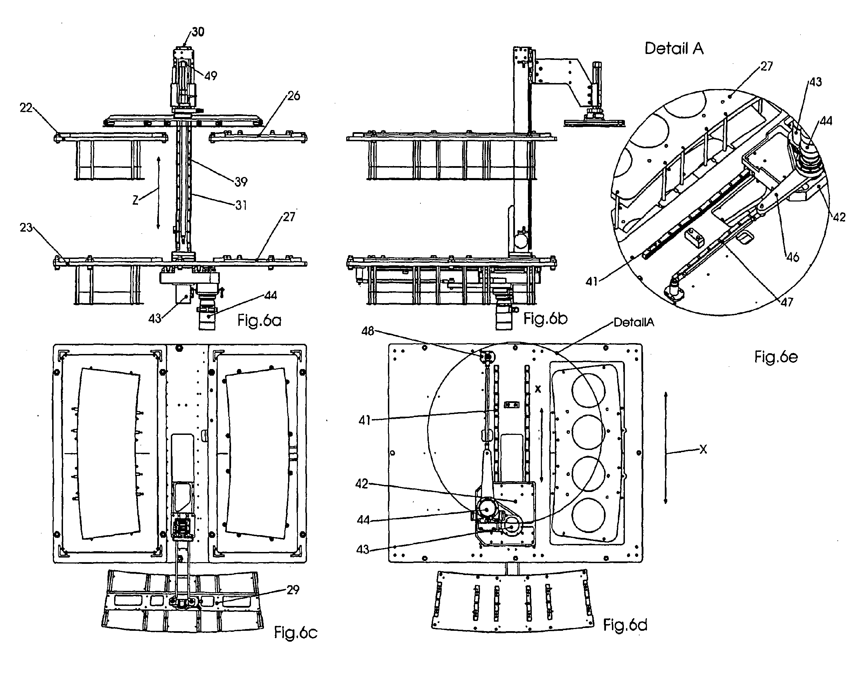

Nach der Ablage des Substrates 25 in der oberen Ablageposition 26 durch Relativverstellen des Entnahmemittels 29 zu dem Arm 37 und damit zu dem Hubschlitten 40, wird das Entnahmemittel 29 durch Ansteuern des Antriebs 44 in die entgegengesetzte Richtung wieder in die in den Fig. 2a bis 2e gezeigte Position oberhalb des oberen Magazins 24 verschwenkt, in der durch Relativverstellen des Entnahmemittels 29 entlang der Z-Achse relativ zu dem Hubschlitten 40 ein weiteres Substrat 25 aus dem oberen Magazin 24 entnommen wird. Daraufhin wird das Entnahmemittel in die in den Fig. 6a bis 6e sowie in Fig. 1 gezeigte Liftposition verschwenkt, in der das Entnahmemittel 29 eine um 90° verschwenkte Position relativ zu den Magazinen 24, 27 und den Ablagepositionen 26, 28 einnimmt. Zu erkennen ist, dass das Entnahmemittel 29 in dieser Liftposition translatorisch aus dem Bereich der Magazine 24, 27 sowie der Ablagepositionen 26, 28 heraus verschwenkt wurde, so dass ein Verstellen auf dem Hubschlitten 40 entlang der Z-Achse entlang der Schiene 39 möglich ist. Zum Verstellen des mit dem Hubschlitten 40 verbundenen Arms 37 entlang der Z-Achse relativ zu dem Träger 38 ist ein nicht näher gezeigter servo-elektrischer Antrieb vorgesehen. Nach Verfahren der Entnahmemittel 29 in die untere Arbeitsebene 23 wird der Schwenkarm 46 mittels des Antriebs 44 im Uhrzeigersinn verstellt, so dass das Entnahmemittel 29 unmittelbar oberhalb der unteren Ablageposition 28 zum Halten kommt und das Substrat in dieser Position durch Relativverstellen des Entnahmemittels 29 relativ zu dem Arm 37 in der unteren Ablageposition 28 ablegbar ist.

## Patentansprüche

1. Zuführeinrichtung für flache Substrate (25) wie Etiketten oder dgl., insbesondere zum Zuführen von flachen Substraten (25) in eine Spritzgussvorrichtung, mit einer ein oberes Magazin (24) für gestapelte flache Substrate (25) sowie eine obere Ablageposition (26) aufweisenden oberen Arbeitsebene (22) und mit einer ein unteres Magazin (27) für gestapelte Substrate (25) sowie eine untere Ablageposition (28) aufweisenden unteren Arbeitsebene (23) und mit einer ein Entnahmemittel (29) aufweisenden Handhabungseinrichtung (30) zum Entnehmen von Substraten (25) aus dem oberen und dem unteren Magazin (24, 27),
**dadurch gekennzeichnet,**
**dass** mit der Handhabungseinrichtung (30) sowohl ein aus dem oberen als auch ein aus dem unteren Magazin (24, 27) entnommenes Substrat (25) alternativ in der oberen oder in der unteren Ablageposition (26, 28) ablegbar ist.

2. Zuführeinrichtung nach Anspruch 1,
**dadurch gekennzeichnet,**
**dass** die Handhabungseinrichtung (30) derart angesteuert ist, dass die aus einem der Magazine (24, 27) entnommenen Substrate (25) alternierend in der oberen und der unteren Ablageposition (26, 28) ablegbar sind.

3. Zuführeinrichtung nach einem der vorhergehenden Ansprüche,
**dadurch gekennzeichnet,**
**dass** die Handhabungseinrichtung (30) derart angesteuert ist, dass diese solange Substrate (25) aus ausschließlich einem der Magazine (24, 27) entnimmt, bis das entsprechende Magazin geleert ist oder bis eine entsprechende Magazinwechsel-Ansteuerung erfolgt.

4. Zuführeinrichtung nach einem der vorhergehenden Ansprüche,
**dadurch gekennzeichnet,**
**dass** die Magazine (24, 27) und die Ablagepositionen (26, 28) auf gegenüberliegenden Seiten der Handhabungseinrichtung (30) angeordnet sind.

5. Zuführeinrichtung nach einem der vorhergehenden Ansprüche,
**dadurch gekennzeichnet,**
**dass** das obere Magazin (24) unmittelbar oberhalb des unteren Magazins (27) angeordnet ist, und dass die obere Ablageposition (26) unmittelbar oberhalb der unteren Ablageposition (28) angeordnet ist.

6. Zuführeinrichtung nach einem der vorhergehenden Ansprüche,
**dadurch gekennzeichnet,**
**dass** der minimale Abstand zwischen dem oberen Magazin (24) und der oberen Ablageposition (26) und/oder der minimale Abstand zwischen dem unteren Magazin (27) und der unteren Ablageposition (28) geringer ist als die Längserstreckung des Entnahmemittels (29).

7. Zuführeinrichtung nach einem der vorhergehenden Ansprüchen,
**dadurch gekennzeichnet,**
**dass** das Entnahmemittel (29) durch eine gekoppelte translatorische sowie rotatorische Bewegung zwischen den Magazinen (24, 27) und den Ablagepositionen (26, 28) verstellbar ist.

8. Zuführeinrichtung nach einem der vorhergehenden Ansprüche,
**dadurch gekennzeichnet,**
**dass** das Entnahmemittel (29) durch eine gekoppelte translatorische sowie rotatorische Bewegung in eine Liftposition verstellbar ist, in der es vertikal zwischen den Arbeitsebenen (22, 23) verstellbar ist.

9. Zuführeinrichtung nach Anspruch einem der Ansprüche 7 oder 8,
**dadurch gekennzeichnet,**
**dass** das Entnahmemittel (29) zur Entnahme eines Substrates (25) aus einem der Magazine (24, 27) und zur Ablage des Substrates in einer der Ablagepositionen (26, 28) um 180° rotierbar ist.

10. Zuführeinrichtung nach einem der vorhergehenden Ansprüche,
**dadurch gekennzeichnet,**
**dass** das Entnahmemittel (29) mittels einer Hubeinrichtung (31) entlang einer Z-Achse vertikal zwischen den Arbeitsebenen (22, 23) verstellbar ist.

11. Zuführeinrichtung nach Anspruch 10,
**dadurch gekennzeichnet,**
**dass** die Hubeinrichtung (31) um die Z-Achse verschwenkbar an einem translatorisch entlang einer horizontalen X-Achse verstellbaren Schlitten (42) gelagert ist.

12. Zuführeinrichtung nach einem der Ansprüche 10 oder 11,
**dadurch gekennzeichnet,**
**dass** das Entnahmemittel (29) relativ zu einem, insbesondere horizontalen, Arm (37) oder Hubeinrichtung (31) entlang der Z-Achse verstellbar ist.

13. Zuführeinrichtung nach einem der Ansprüche 11 oder 12,
**dadurch gekennzeichnet,**
**dass** ein Schwenkarm (46) gelenkig mit dem Schlitten (42) verbunden ist, und dass der Schwenkarm (46) gelenkig mit einem Kopplerarm (47) verbunden ist, der wiederum an einer Position der Zuführeinrichtung (20) angelenkt ist, relativ zu der der Schlitten (42) entlang der X-Achse verstellbar ist.

14. Spritzgussvorrichtung mit einer Zuführeinrichtung (20) für flache Substrate (25) gemäß einem der vorhergehenden Ansprüche.

15. Verfahren zum Zuführen von flachen Substraten (25) wie Etiketten oder dgl., insbesondere zum Zuführen von flachen Substraten (25) in eine Spritzgussvorrichtung, vorzugsweise zum Zuführen von flachen Substraten (25) mittels einer Zuführeinrichtung (20) nach einem der Ansprüche 1 bis 14, mit folgenden Schritten:
• Entnehmen eines Substrates (25) aus einem oberen oder einem unteren Magazin (24, 27),
• Ablegen des Substrates (25) in einer oberen oder einer unteren Ablageposition (26, 28)
• Entnehmen eines weiteren Substrates (25) aus demselben Magazin (24, 27)
• Ablegen des weiteren Substrates (25) in der anderen Ablageposition (26, 28).

## Claims

1. Supplying device for flat substrates (25), such as labels or the like, in particular for supplying flat substrates (25) to an injection moulding device, said supplying device comprising an upper chamber (24) for stacked flat substrates (25) and an upper working plane (22) having an upper deposit position (26), and comprising a lower chamber (27) for stacked substrates (25) and a lower working plane (23) having a lower deposit position (28), and comprising a handling unit (30) having a removal means (29) for removing substrates (25) from the upper and lower chambers (24, 27), **characterised in that** the handling unit (30) can alternately deposit a substrate (25) removed from either the upper or lower chamber (24, 27) in the upper or lower deposit position (26, 28).

2. Supplying device according to claim 1, **characterised in that** the handling unit (30) is controlled in such a way that the substrates (25) removed from one of the chambers (24, 27) can be deposited in the upper and lower deposit positions (26, 28) in an alternating manner.

3. Supplying device according to either claim 1 or claim 2, **characterised in that** the handling unit (30) is controlled in such a way that it removes substrates (25) from only one of chambers (24, 27) until the relevant chamber is empty or until a relevant command is given to switch to the other chamber.

4. Supplying device according to any one of the preceding claims, **characterised in that** the chambers (24, 27) and the deposit positions (26, 28) are arranged on opposite sides of the handling unit (30).

5. Supplying device according to any one of the preceding claims, **characterised in that** the upper chamber (24) is arranged directly above the lower chamber (27), and **in that** the upper deposit position (26) is arranged directly above the lower deposit position (28).

6. Supplying device according to any one of the preceding claims, **characterised in that** the minimum distance between the upper chamber (24) and the upper deposit position (26) and/or the minimum distance between the lower chamber (27) and the lower deposit position (28) is/are less than the longitudinal extension of the removal means (29).

7. Supplying device according to any one of the preceding claims, **characterised in that** the removal means (29) can be displaced by a coupled translatory and rotatory movement between the chambers (24, 27) and the deposit positions (26, 28).

8. Supplying device according to any one of the preceding claims, **characterised in that** the removal means (29) can be displaced into a lifting position by a coupled translatory and rotatory movement, in which position it can be moved vertically between the working planes (22, 23).

9. Supplying device according to either claim 7 or claim 8, **characterised in that** the removal means (29) is rotatable through 180° in order to remove a substrate (25) from one of the chambers (24, 27) and in order to deposit the substrate in one of the deposit positions (26, 28).

10. Supplying device according to any one of the preceding claims, **characterised in that** the removal means (29) can be displaced by a lifting device (31) vertically along a Z-axis between the working planes (22, 23).

11. Supplying device according to claim 10, **characterised in that** the lifting device (31) is mounted pivotally on a sliding carriage (42), which is displaceable along a horizontal X-axis in a translatory manner.

12. Supplying device according to either claim 10 or claim 11, **characterised in that** the removal means (29) is displaceable relative to an, in particular horizontal, arm (37) of the lifting device (31) along the Z-axis.

13. Supplying device according to either claim 11 or claim 12, **characterised in that** a swivel arm (46) is articulated to the sliding carriage (42), and **in that** the swivel arm (46) is articulated to a coupler arm (47) which, in turn, is coupled to a position of the supplying device (20), relative to which the sliding carriage (42) is displaceable along the X-axis.

14. Injection moulding device comprising a supplying device (20) for flat substrates (25) according to any one of the preceding claims.

15. Method for supplying flat substrates (25), such as labels o the like, in particular for supplying flat substrates (25) to an injection moulding device, preferably for supplying flat substrates (25) using a supplying device (20) according to any one of claims 1 to 14, comprising the following steps:
• removing a substrate (25) from an upper or lower chamber (24, 27);
• depositing the substrate (25) in an upper or lower deposit position (26, 28);
• removing a further substrate (25) from the same chamber (24, 27);
• depositing the further substrate (25) in the other deposit position (26, 28).

## Revendications

1. Dispositif d'introduction de substrats (25) plats, tels que des étiquettes ou analogues, en particulier pour introduction de substrats (25) plats dans un dispositif de moulage par injection, avec plan de travail supérieur (22) présentant un magasin supérieur (24) pour des substrats (25) plats empilés, ainsi qu' une position de dépose supérieure (26), et avec plan de travail inférieur (23) présentant un magasin inférieur (27), pour des substrats (25) empilés, ainsi qu'une position de dépose inférieure (28), et avec un dispositif de manutention (30) présentant des moyens de prélèvement (29), pour prélever des substrats (23) à partir du magasin supérieur et du magasin inférieur (24, 27),
**caractérisé en ce que**,
avec le dispositif de manutention (30), un substrat (25), prélevé tant du magasin supérieur que du magasin inférieur (24, 27), est susceptible d'être déposé alternativement dans la position de dépose supérieure ou dans la position de dépose inférieure (26, 28).

2. Dispositif d'introduction selon la revendication 1,
**caractérisé en ce que**
le dispositif de manutention (30) est commandé de manière que les substrats (25) prélevés d'un des magasins (24, 27) sont susceptibles d'être déposés alternativement dans la position de dépose supérieure et dans la position de dépose inférieure (26, 28).

3. Dispositif d'introduction selon l'une des revendications précédentes,
**caractérisé en ce que**
le dispositif de manutention (30) est commandé de manière que celui-ci prélève des substrats (25) depuis exclusivement l'un des magasins (24, 27), jusqu'à ce que le magasin correspondant soit vidé, ou jusqu'à ce qu'une commande de changement de magasin correspondante soit émise.

4. Dispositif d'introduction selon l'une des revendications précédentes,
**caractérisé en ce que**
les magasins (24, 27) et les positions de dépose (26, 28) sont agencés sur des côtés opposés du dispositif de manutention (30).

5. Dispositif d'introduction selon l'une des revendications précédentes,
**caractérisé en ce que**
le magasin supérieur (24) est disposé immédiatement au-dessus du magasin inférieur (27), et **en ce que** la position de dépose supérieure (26) est disposée immédiatement au-dessus de la position de dépose inférieure (28).

6. Dispositif d'introduction selon l'une des revendications précédentes,
**caractérisé en ce que**
l'espacement minimal, entre le magasin supérieur (24) et la position de dépose supérieure (26) et/ou l'espacement minimal, entre le magasin inférieur (27) et la position de dépose inférieure (28), est inférieur à la dimension longitudinale des moyens de prélèvement (29).

7. Dispositif d'introduction selon l'une des revendications précédentes,
**caractérisé en ce que**
les moyens de prélèvement (29) sont réglables au moyen d'un mouvement couplé de translation et de rotation entre les magasins (24, 27) et les positions de dépose (26, 28).

8. Dispositif d'introduction selon l'une des revendications précédentes,
**caractérisé en ce que**
les moyens de prélèvement (29) sont réglables, au moyen d'un mouvement couplé de translation et de rotation, en une position de levée à laquelle ils sont réglables verticalement entre les plans de travail (22, 23).

9. Dispositif d'introduction selon l'une des revendications 7 ou 8,
**caractérisé en ce que**
les moyens de prélèvement (29) sont susceptibles de tourner de 180° pour prélèvement d'un substrat (25) à partir d'un des magasins (24, 27) et pour dépose du substrat dans l'une des position de dépose (26, 28)

10. Dispositif d'introduction selon l'une des revendications précédentes,
**caractérisé en ce que**
les moyens de prélèvement (29) sont réglables le long d'un axe Z, verticalement entre les plans de travail (22, 23), au moyen d'un dispositif de levage (31).

11. Dispositif d'introduction selon la revendication 10,
**caractérisé en ce que**
le dispositif de levage (31) est monté sur un chariot (42) réglable en translation le long d'un axe X horizontal, de manière à pouvoir pivoter autour de l'axe Z.

12. Dispositif d'introduction selon l'une des revendications 10 ou 11,
**caractérisé en ce que**
les moyens de prélèvement (29) sont réglables le long de l'axe Z, par rapport à un bras (37), en particulier horizontal, du dispositif de levage (31).

13. Dispositif d'introduction selon l'une des revendications 11 ou 12,
**caractérisé en ce qu'**
un bras pivotant (46) est relié de manière articulée au chariot (42), et **en ce que** le bras pivotant (46) est relié de manière articulé à un bras de coupleur (47), à son tour articulé en une position du dispositif d'introduction (20), par rapport à laquelle le chariot (42) est réglable le long de l'axe X.

14. Dispositif de moulage par injection, muni d'un dispositif d'introduction (20) pour des substrats (25) plats selon l'une des revendications précédentes.

15. Procédé d'introduction de substrats (25) plats, tels que des étiquettes ou analogues, en particulier pour introduction de substrats (25) plats dans un dispositif de moulage par injection, de préférence pour introduire des substrats (25) plats au moyen d'un dispositif d'introduction (20) selon l'une des revendications 1 à 14, comprenant les étapes suivantes :
• prélèvement d'un substrat (25) à partir d'un magasin supérieur ou d'un magasin inférieur (24, 27),
• dépose du substrat (25) dans une position de dépose supérieure ou inférieure (26, 28),
• prélèvement d'un autre substrat (25) à partir du même magasin (24, 27),
• dépose de l'autre substrat (25) dans l'autre position de dépose (26, 28).
